# EUROPEAN PATENT APPLICATION

(11) **EP 1 953 199 A1**
(43) Date of publication of application: **06.08.2008**
(21) Application number: 07002191.0
(22) Date of filing: 01.02.2007
(51) Int. Cl.: C09D 5/03, B01J 13/04, C08J 3/24, C08K 9/10

(54) **Powder coating composition comprising an encapsulated crosslinker**

(71) Applicant: Stichting Dutch Polymer Institute, 5612 AB Eindhoven (NL)
(72) Inventor: Senatore, D., 5612 AZ Eindhoven (NL); van Benthem, Rudolfus Antonius Theodorus Maria, 5612 AZ Eindhoven (NL); Laven, J., 5612 AZ Eindhoven (NL); de With, Gijsbertus, 5612 AZ Eindhoven (NL)
(74) Representative: Renkema, Jaap

(57) **Abstract**

The present invention relates to a powder coating composition comprising:
(i) a polymer having reactive groups, and
(ii) a crosslinker capable of reacting with said reactive groups,

wherein the crosslinker is encapsulated in a material having a Tg of from about 80 °C to about 170 °C. The compositions are stable during storage and processing, but form good coatings upon application to a substrate.

## Description

This present invention relates to powder coating compositions with encapsulated crosslinkers and process, methods and uses thereof.

A powder coating composition is a solid coating composition usually in the form of a dry, free flowing powder. Typical compositions comprise a matrix of binder, consisting of the major film-forming components, mixed with minor components such as colorants, flow agents and crosslinkers. Generally, the composition is formed via an extrusion process that is performed at a elevated temperature (e.g. 80-100 °C).

The extrudate is milled, sieved, and can then be stored. Once the powder coating composition is applied to the surface of a substrate it is fused to form a continuous film by heating or "baking". The baking temperature is typically in the range of 160-200 °C for thermal curing formulations.

Powder coatings offer many advantages over conventional liquid systems such as:
1. Ability to reclaim powders during application which leads to almost 100% utilization of the coating composition materials,
2. No emission of volatile organic compounds (VOCs),
3. Application of an even coat can be achieved with one spray, without the need for extensive and overlapping spraying,
4. Cost per unit of coated area is cheaper than most conventional methods.

Powder coatings are therefore an economic, energy-efficient, and environmentally friendlier surface coating technology. They are also clean and convenient to use, since they are in dry solid form.

Despite powder coatings' many advantages, they are typically used for coating metals, and are generally not employed for heat-sensitive substrates which demand lower baking and/or curing temperatures. Lower curing temperatures are not possible with traditional thermal curable powders. This is mainly due to the fact that reactive cross-linking agents for low curing temperatures can adversely affect the shelf-life of the composition and the flow during the baking and curing process.

It would be desirable to have a powder coating composition that could be cured at a low temperature. It would also be desirable to have a powder coating composition that is stable during storage and/or demonstrates good properties during processing.

The present invention provides a powder coating composition that has an encapsulated crosslinker. In one embodiment the encapsulating material has a glass transition temperature (T_{g}) of from about 80 °C to about 170 °C, preferably from about 80 °C to about 120 °C, more preferably between 90 °C and 110 °C. Surprisingly it has been found that using encapsulants with such a T_{g} provide powder coating compositions that are stable during storage and processing but release the crosslinker during curing. One particular advantage of the present compositions is that they allow for relatively low-temperature curing.

### SUMMARY OF THE INVENTION

The present invention relates to powder coating compositions comprising:
(i) a polymer having reactive groups, and
(ii) a crosslinker capable of reacting with said reactive groups,
wherein the crosslinker is encapsulated in a material having a T_{g} from about 80 °C to about 170 °C. Preferably the encapsulating polymer (encapsulant) is miscible with the polymer in a weight ratio of encapsulant/resin between 1:1 to 1:20 and at a temperature between 20 °C to 140 °C. Preferably the encapsulant is a polymer.

The present invention further relates to a process for producing a powder coating composition comprising an encapsulated crosslinker.

The present invention further relates to an additive for powder coating compositions wherein the additive comprises a crosslinker encapsulated in material having a T_{g} from about 80 °C to about 170 °C. The invention further relates to methods for making and uses of such an additive.

The present invention further relates to a process for coating a substrate with a powder coating composition comprising an encapsulated crosslinker.

The present invention further relates to a substrate at least partially coated with a powder coating composition comprising an encapsulated crosslinker.

As used herein, the term 'encapsulated crosslinker' means that the crosslinker, as described hereinbelow, is constrained, by physical or other means, from contacting the thermosetting polymer prior to the crosslinking/curing step. Preferably the crosslinker is constrained within a polymer.

As used herein, the term 'heat-sensitive substrate' means a substrate that will partially or fully deteriorate under the influence of heat. Therefore treatment of such a substrate generally requires temperatures below 130 °C, preferably below 110 °C.

As used herein, the term 'glass transition temperature' (T_{g}) means the temperature above which there is an increase in the temperature coefficient of the expansion of the encapsulating material.

Unless otherwise stated all references herein are hereby incorporated by reference.

### DETAILED DESCRIPTION OF THE INVENTION

The compositions of the present invention comprise a polymer and an encapsulated crosslinker, wherein the polymer and the crosslinker are capable of reacting with one another. The preparation of powder coatings in general and the chemical reactions for curing powder paints to form cured powder coatings are described by Misev in Powder Coatings, Chemistry and Technology (1991, John Wiley) on pp. 42-54, pp. 148 and 224-226. Test procedures are described at pages 284-300. A thermosetting powder paint binder composition is generally defined as the resinous part of the powder paint composition consisting of polymer and crosslinker(s) and this composition generally contains more than 50 wt.% polymer and less than 50 wt.% crosslinker(s).

The polymer can be any suitable polymer. Suitable polymers can be selected from, but not limited to, epoxys, polyacrylics, polyacrylates, polyesters, and mixtures thereof. Preferred are polyesters and/or polyacrylates.

Preferably the polymer is selected from polyesters, more preferably from acid- and/or hydroxy- functional polyesters, even more preferably from carboxylic acid group-containing polyesters. Among the suitable polyesters are those based on a condensation reaction of linear aliphatic, branched aliphatic and cyclo-aliphatic polyols with aliphatic, cyclo-aliphatic and/or aromatic polycarboxylic acids and anhydrides. The ratio of polyol and acids or anhydrides is such that there is an excess of acid or anhydride over alcohol so as to form a polyester which has free carboxylic groups.

Polyesters for use herein can comprise units of, for example, isophthalic acid, terephthalic acid, 2,6-naphthalene dicarboxylic acid, 4,4'-oxybisbenzoic acid, 3,6-dichloro phthalic acid, tetrachloro phthalic acid, tetrahydro phthalic acid, trimellitic acid, pyromellitic acid, hexahydro terephthalic acid (cyclohexane dicarboxylic acid), hexachloro endomethylene tetrahydro phthalic acid, phthalic acid, azelaic acid, sebacic acid, decane dicarboxylic acid, adipic acid, succinic acid, maleic acid, fumaric acid, and mixtures thereof. These acids may be used as such, or, in so far as available, as their anhydrides, acid chlorides, and/or lower alkyl esters. Preferably, the polyester is based on at least one of isophthalic acid and/or terephthalic acid. Trifunctional or higher functional acids may be used also. Examples of suitable such acids include trimellitic acid or pyromellitic acid. These tri- or higher functional acids may be used as end groups or to obtain branched polyesters.

Hydroxy carboxylic acids and/or optionally lactones can also be used, for example, 12-hydroxy stearic acid, hydroxy pivalic acid and ε-caprolactone.

Monocarboxylic acids may also be used if desired. Examples of these acids are benzoic acid, tert.-butyl benzoic acid, hexahydro benzoic acid and saturated aliphatic monocarboxylic acids.

Useful polyalcohols, in particular diols, reactable with the carboxylic acids to obtain the polyester include aliphatic diols. Examples are ethylene glycol, propane-1,2-diol, propane-1,3-diol, butane-1,2-diol, butane-1,4-diol, butane-1,3-diol, 2,2-dimethylpropanediol-1,3 (neopentyl glycol), hexane-2,5-diol, hexane-1,6-diol, 2,2-bis-(4hydroxy-cyclohexyl)-propane (hydrogenated bisphenol-A), 1,4-dimethylolcyclohexane, diethylene glycol, dipropylene glycol, 2,2-bis[4-(2-hydroxy ethoxy)-phenyl] propane, the hydroxy pivalic ester of neopentyl glycol, 2-ethyl, 2-butyl propanediol-1,3 (butylethylpropane diol), 2-ethyl, 2-methyl propanediol-1,3 (ethylmethylpropane diol), and 2-methylpropanediol-1,3 (MP-Diol).

Tri- or higher functional alcohols may be used in order to obtain branched polyesters. Examples of suitable such polyols include glycerol, hexanetriol, trimethylol ethane, trimethylol propane tris-(2-hydroxyethyl)- isocyanurate, penta erythritol and sorbitol.

The polyester may be prepared according to conventional procedures by esterification or transesterification, optionally in the presence of customary esterification catalysts, for example dibutyltin oxide or tetrabutyl titanate. Preparation conditions and the COOH/OH ratio can be selected so as to obtain end products that have a particular desired acid number and/or a hydroxyl number.

Preferably, the polymer has an acid or hydroxy value between 20 and 200 mg KOH/gram resin; more preferably between 20 and 120 mg KOH/gram resin.

The number average molecular weight (Mn) of the polymer is preferably between about 1,000 and about 7,000, more preferably between about 1,400 and about 6,000. Preferably the polymer is an amorphous solid at room temperature.

The polymer preferably has a viscosity lower than 200 Pa.s (measured at 160 °C, Rheometrics CP 5), more preferably lower than 150 Pa.s. The glass transition temperature, T_{g}, of the polymer is preferably in the range between 20 °C and 100°C, more preferably from about 35 °C to about 85 °C, even more preferably from about 40 °C to about 75 °C.

The present compositions comprise one or more crosslinkers. Any crosslinker or mixture of crosslinkers that is suitable for use (i.e. reactive with) with the polymer may be used herein. Preferably the crosslinker is flowable at 140 °C or below, more preferably at 120 °C or below. Preferably the crosslinker is liquid at 140 °C or below. Preferably the crosslinker is capable of reacting with carboxyl-functional polymers and hydroxy-functional polymers.

Various types of crosslinkers or mixtures of crosslinkers may be used herein. Examples of suitable crosslinkers for carboxyl-functional resin are liquid epoxy such as tryglycidil trimillitate, epoxidezed vegetable oil such as epoxidezed linseed oil and Epikote 828™. Suitable crosslinkers for hydroxy-functional resin are liquid isocyanate, liquid blocked isocyanate, liquid melamine resin (HMMM) glycoluril (derivative), benzoguanamine (derivative), amino resin, phenolic resin, and combinations thereof.

The present compositions comprise a crosslinker encapsulated in an encapsulating material. The encapsulating material has a T_{g} of from about 80 °C to about 170 °C. Preferably the material has a T_{g} of from about 80 °C to about 120 °C. More preferably the encapsulating material has a T_{g} of from about 90 °C to about 110 °C. It has surprisingly being found that when a crosslinker is encapsulated in a material having a T_{g} within these ranges it provides a composition with acceptable storage and processing characteristics as well as good release properties. In addition, it has been found that the present encapsulating materials do not adversely affect the properties of the coating. While not wishing to be bound by theory, it is believed that encapsulating the crosslinker in the material having the specified characteristics minimizes any pre-reaction during, for example, the extrusion phase; but once the temperature exceeds the T_{g} of the encapsulating material, such as during a curing step, the encapsulant dissolves in a kinetic process and the crosslinker is able to react.

The T_{g} value for certain materials is available in the literature but can also be measured according to "Differential Scanning Calorimetry: an introduction to practitioners", Hohne G., Hemminger, W. Flammersheim, Springer, 1996, p. 163. The test involves:
1. Hermetically sealing a sample of 10-20 mg in an Al pan (max internal pressure of 0.2 MPa) or stainless steel pan (max. internal pressure of 2.4 MPa). Any evaporation of water upon heating is to be avoided;
2. heating the sample to a temperature at least 15 °C to 30 °C above T_{g} (1^{st} scan);
3. annealing the sample for 5-10 minutes at this temperature in order to establish thermodynamic equilibrium and erase the thermal history of the system;
4. cooling the sample at 30 °Cmin⁻¹ to a temperature at least 50 °C below the glass transition temperature;
5. re-heating at constant speed of 20 °Cmin⁻¹ (2^{nd} scan);
6. the T_{g} is calculated as half-step temperature (T_{g,½}) related to the Cp change.

Preferably the encapsulating material is miscible with the polymer in a weight ratio of encapsulant/resin between 1:1 to 1:20 and at temperature between 20 °C to 140 °C. Preferably the encapsulating material is soluble in the polymer and it does not substantially react with the crosslinker.

Preferred encapsulating materials include polyvinylpyrrolidone, polystyrene, polyvinylcaprolactam, polyacrylates (for example, polymethymetacrylate, polyacrylicacid), polyvinylalcohol, polyvinylacetate, polyphenylether, polyoxoazolines, mixtures and copolymers thereof.

Preferably the weight ratio of encapsulating material to crosslinker is from 1:5 to 5:1; more preferably from 1:3 to 3:1.

The encapsulated crosslinkers may be prepared in any suitable manner but in preferred embodiments spray-drying is used.

Preferably the compositions of the present invention are produced by:
(a) producing a aqueous pre-emulsion of the crosslinker and the encapsulating material,
(b) if necessary, homogenizing the pre-emulsion,
(c) producing a fine mist of the pre-emulsion,
(d) spray-drying.

Preferably the fine mist of pre-emulsion is produced by ultrasonication.

Preferably the spray-drying is performed using air.

Preferably the spray-drying is performed at an inlet temperature of 170 °C or less, more preferably at a temperature of 150 °C or less.

Preferably the particles of the encapsulated crosslinker have an average size of from 1 µm to 100 µm, more preferably from 3 µm to 50 µm, even more preferably from 5 µm to 30 µm.

In addition to the components mentioned above the present compositions may comprise one or more additives such as, for example, pigment, filler, degassing agent, flow agent and/ or stabilizer. Suitable pigments include inorganic pigments such as titanium dioxide, zinc sulphide, iron oxide and chromium oxide, and also organic pigments such as azo compounds. Suitable fillers include for example metal oxides, silicates, carbonates and/or sulphates. Primary and/or secondary antioxidants, UV stabilizers such as quinones, (sterically hindered) phenolic compounds, phosphonites, phosphites, thioethers, HALS compounds (hindered amine light stabilizers) and aromatic amines, may for example be used as stabilizers. Examples of degassing agents include benzoin and cyclohexane dimethanol bisbenzoate. Examples of flow agents include polyalkylacrylates, fluorohydrocarbons and silicone fluids. Other suitable additives include, for example, additives for improving tribocharging, such as sterically hindered tertiary amines that are described in EP-A-371,528.

The present invention further relates to a process for coating a substrate with a powder paint composition according to the invention comprising at least the following steps:
a. Optionally pre-treating and/or pre-heating the substrate,
b. Applying a powder paint composition as described herein to the substrate,
c. Heating the coated substrate from step b) to a temperature and for such a period that the coating is at least partially cured,
d. Optionally applying a second cure step.

The process according to the invention is preferably used without the use of step a) and/ or d).

The coating process can be used in various temperature regimes. The man skilled in the art can readily determine which temperature regime is most suitable for his application. Preferably the cure temperature is 150 °C or below, more preferably 140 °C or below, even more preferably 130°C or below, even more preferably still 110 °C or below.

The process according to the invention can be used to coat all kinds of substrates. Examples of suitable substrates include metal, (galvanized) steel, cast iron, other alloys, glass, ceramic, bricks. plastic, paper, cardboard, cork, solid wood, veneer, chip wood, wood composite material, for example particle board, high, medium or low density fibre board, plywood, and other substrates that contain a significant amount of wood.

Preferably the substrate is a heat-sensitive substrate. Examples of heat-sensitive substrates include, but are not limited to, leather, artificial leather, textile, plastic, paper, cardboard, wood, wood composites such as for example particle board and high, medium or low density fibre board, and combinations thereof.

The present compositions can be applied to a suitable substrate in any suitable manner. For example, they can be electrostatically sprayed onto an earthed substrate.

The present invention also relates to a substrate fully or partially coated with a composition according to the invention or obtained by a process according to the present invention.

The invention will be elucidated with reference to the following nonlimiting Examples.

### EXAMPLES

Poly(N-vinyl-2-pyrrolidone) (PVP) (Povidone K30) with an Mw of about 40k Da was dissolved in 120 g distilled water containing 1% in weight of sodium dodecyl sulphate (SDS). Once the polymer was dissolved, 20 g of Epoxidized Linseed Oil (ELO) having a percentage oxirane oxygen (defined as mass percentage oxygen from the epoxy groups in the sample) of 9.8 was added to the solution and the dispersion was stirred, by means of a magnetic bar, for about 2 hours. The pre-emulsion had a final composition of 40% of solids (PVP, ELO and SDS) in water and an ELO to PVP ratio of 1 to 3. The pre-emulsion was then homogenized by ultrasonication (Sonic VCX,750 W). Then the fine emulsion was spray-dried using a BüCHI B290 mini spray-drier. The spray-drying was performed at an air inlet temperature of 150 °C, air outlet temperature of 100 °C, feed rate of 10 ml/min, air flow of 700L/h and a spray-flow of 500 Nl/h.

The T_{g} of the spray-dried particles was 120 °C.

This material along with the other powder coating components [Table 1] was pre-mixed in a coffee-grinder, and then extruded with a 16 mm twin-extruder (Prism) at a temperature of 100 °C and a speed of 100 rpm. Upon exiting the extruder dye, the melt was cooled to room temperature, ground and sieved. The powder coatings were applied on Al plates (15x7 cm) and were cured at 180 °C for 20 minutes.

### Comparative experiments

Two comparative experiments were prepared [Table 1] by a similar method as in Example 1. That is, all components were pre-mixed in a coffee-grinder, and then extruded with a 16 mm twin-extruder (Prism) at a temperature of 100 °C and a speed of 100 rpm. Upon exiting the extruder dye, the melt was cooled to room temperature, ground and sieved. The powder coatings were applied on Al plates (15x7 cm) and were cured at 180 °C for 20 minutes.

**TABLE 1**

| | **Example 1** | **Comp. Ex. A** | **Comp. Ex. B** |
|---|---|---|---|
| | **(wt%)** | **(wt%)** | **(wt%)** |
| Uralac P954 | 62 | 84 | 62 |
| Epoxidized Linseed Oil | | 7 | 5 |
| Catalyst ² | 4 | | |
| PVPK30³ | | | 26 |
| Spray Dried Particles⁴ | 31 | | |
| Flow agents⁵ | 2 | | |
| Antioxidants⁶ | 1 | 9 | 7 |

| | | | |
|---|---|---|---|
| 1. Acid value 25.4 mg/g, viscosity= 55.3 Pas. 2. Uranox P7121 containing 20% w of catalyst (available from DSM Resin, Zwolle, NL) 3. Poly(N-vinylpyrrolidone), Mw=30.000 4. Spray Dried Particles (encapsulated ELO) 5. Resiflow PV5 and Benzoin 6. Stabilizer P43 (phenolic anxioxidant) and ADK stab LA 63 (hindered amine) | | | |

The composition of Example 1 was kept in an oven at 40 °C for 14 days; and it maintained its free-flow properties. The compositions of the comparative experiments suffered a marked loss in free-flow properties under the same storage conditions.

## Claims

1. A powder coating composition comprising
(i) a polymer having reactive groups, and
(ii) a crosslinker capable of reacting with said reactive groups,
wherein the crosslinker is encapsulated in a material having a T_{g} of from about 80 °C to about 170 °C.

2. A composition according to Claim 1 wherein the encapsulating material has a T_{g} of from about 80 °C to about 120 °C.

3. A composition according to any preceding claim wherein the crosslinker is flowable at 140 °C or below.

4. A composition according to any preceding claim wherein the encapsulating material is selected from polyvinylpyrrolidone, polystyrene, polyvinyl capralactam, polyacrylates, polyvinylalcohol, polyvinylacetate, polyphenylether, polyoxoazolines, mixtures and copolymers thereof.

5. A composition according to any preceding claim wherein the ratio of encapsulating material to crosslinker is from 1:5 to 5:1.

6. A composition according to any preceding claim wherein the polymer is selected from polyesters.

7. A composition according to any preceding claim wherein the particles of the encapsulated crosslinker have an average size of from 1 µm to 100 µm.

8. Use of a composition according to any of the preceding claims for at least partially coating a substrate.

9. A method of producing a composition according to any of the preceding claims comprising the steps:
(i) encapsulating a crosslinker in a material having a T_{g} of from about 80°C to about 170°C, and
(ii) mixing said encapsulated crosslinker with a polymer having groups that are capable of reacting with the crosslinker.

10. A method of producing a composition according to any of the preceding claims comprising the steps:
(i) encapsulating a crosslinker in a material having a T_{g} of from about 80°C to about 170°C by a spray-drying process, and
(ii) mixing said encapsulated crosslinker with a polymer having groups that are capable of reacting with the crosslinker.

11. An additive for powder coating compositions, wherein the additive comprises a crosslinker encapsulated in a material having a T_{g} of from about 80 °C to about 170 °C.
